# EUROPEAN PATENT APPLICATION

(11) **EP 3 952 014 A1**
(43) Date of publication of application: **09.02.2022**
(21) Application number: 20189391.4
(22) Date of filing: 04.08.2020
(51) Int. Cl.: H01M 50/20, H01M 50/50, H01M 10/04, H01M 10/42, H01M 10/48

(54) **BATTERY MODULE AND MOUNTING METHOD**

(71) Applicant: ABB Schweiz AG, 5400 Baden (CH)
(72) Inventor: SCHUME, Matthias, 79787 Lauchringen (DE); WITTWER, Bastian, 5034 Suhr (CH); RUEEGG, Walter, 5304 Endingen (CH); WICKI, Stefan, 5702 Niederlenz (CH); FEUERER, Bernhard, 5200 Brugg (CH)
(74) Representative: Qip Patentanwälte Dr. Kuehn & Partner mbB

(57) **Abstract**

A battery module (100), comprises a plurality of battery cells (302) electrically interconnected with each other via cell connectors (106) arranged in an interconnection level (108) of the battery module (100) and a rigid circuit board (112) comprising an electric circuit (114) for evaluating voltage measurements in the battery module (100). The rigid circuit board (112) is arranged in an electronics level (110) of the battery module (100) arranged neighboring to the interconnection level (108). At least two of the cell connectors (106) each incorporate a connection finger (118) angled to the interconnection level (108), wherein each connection finger (118) crosses the electronics level (110) and is electrically connected to an individual contact area (214) of the electric circuit (114) on a far side (120) of the rigid circuit board (112) facing away from the battery cells (302)

## Description

### FIELD OF THE INVENTION

The invention relates to a battery module and a mounting method to build such a battery module.

### BACKGROUND OF THE INVENTION

Electric and hybrid vehicles need means for storing electric energy. Usually, battery modules are used to provide these means. In such a battery module, a plurality of battery cells may be assembled and interconnected.

In such a battery module, voltages of the battery cells may have to be measured to prevent over- and undercharging. When a battery cell is used outside an allowed voltage window, it may be damaged. It may be that a cell voltage of at least every parallel connected battery cell has to be measured. It also may be beneficial to perform temperature measurements to prevent damaging of battery cells due to too fast charging and discharging.

These measurements usually are performed with a measurement unit integrated into the battery module. The measurement unit may be connected with wires to sensors and sensing points in the battery module.

### DESCRIPTION OF THE INVENTION

It is an objective of the invention to provide an economic and reliable battery module. It is a further objective of the invention to provide an economic and reliable mounting method for such a battery module.

These objectives are achieved by the subject-matter of the independent claims. Further exemplary embodiments are evident from the dependent claims and the following description.

The invention relates to a battery module. For example, the battery module may be used in an electric and/or hybrid vehicle, such as an electric car, an electric train, an electric tram, an electric bus, etc. for storing electric energy, which is used for driving the vehicle. In particular, the battery module may be used in bus applications, traction applications and/or may be used in a bus or a traction vehicle.

According to an embodiment of the invention, the battery module comprises a plurality of battery cells. The battery cells are electrically interconnected with each other via cell connectors. The cell connectors are arranged in an interconnection level of the battery module.

For example, prismatic battery cells may be used. The battery cells may be connected in parallel and/or in series via their poles. At least two poles of different battery cells may be connected by one cell connector. One cell connector may be connected to a plurality of different battery cells. In particular one cell connector may be connected to poles of two, four or more different battery cells. The cell connector may be welded to the poles. The cell connector may be made of metal plate. The cell connector may be a stamped part. Major areas of multiple cell connectors of one battery module may be flat and be arranged in a common plane. The plane may be referred to a as interconnection level of the battery module. Mechanically, the battery cells may be assembled in a holding frame, which may be made of metal sheets and/or plastics elements.

According to an embodiment of the invention, the battery module comprises a rigid circuit board. The rigid circuit board comprises an electric circuit for evaluating voltage measurements and/or temperature measurements in the battery module. The rigid circuit board is arranged in an electronics level of the battery module. The electronics level is arranged neighboring to the interconnection level.

A rigid circuit board may comprise a rigid plastics plate with conductive tracks provided in or on the plastics plate. An electric circuit may comprise electronic components attached to the rigid circuit board and the conductive tracks connecting the electronic components. The electric circuit may be seen as a module measurement unit. The electronic components may be packaged semiconductor devices, resistors and capacitors for example. Contact pads for connecting further components of the electric circuit may be provided by the rigid circuit board. The rigid circuit board may be arranged in a plane parallel to the interconnection level. The plane of the rigid circuit board may be referred to as electronics level of the battery module. The electronics level may be slightly offset from the interconnection level.

According to an embodiment of the invention, at least two of the cell connectors each incorporate a connection finger. The connection fingers are angled with respect to the interconnection level. Each connection finger crosses the electronics level. Each connection finger is electrically connected to an individual contact area of the electric circuit. Each connection finger is electrically connected on a far side of the rigid circuit board. The far side is facing away from the battery cells.

A connection finger may be an appendage to a main body of a cell connector. The connection finger may be bent at an angle to the common plane of the cell connectors. An end of the finger may be bent approximately parallel to the plane of the rigid circuit board. The end may be offset to the common plane. Each finger may reach across the rigid circuit board. A contact area may be a contact pad provided by the rigid circuit board. The contact area may be connected to the electric circuit by a conductive track in or on the rigid circuit board. Each finger may be electrically connected to an accessible side of the rigid circuit board.

The invention further relates to a mounting method for such a battery module. The method comprises the steps of placing, moving and connecting.

In the step of placing the rigid circuit board is placed in a locating position. The rigid circuit board is placed along a placing trajectory, which is angled with respect to the interconnection level.

A placing trajectory may end in an orientation position. Along the placing trajectory the battery module and the rigid circuit board may be brought together. The placing trajectory may be angled transverse to the interconnection level. In particular the placing trajectory may be angled perpendicular to the interconnection level within a tolerance range. The tolerance range may be ten degrees for example. The orientation position may be referred to as locating position of the rigid circuit board. In the locating position the rigid circuit board may be aligned to the battery module. In the locating position the ends of the connection fingers and contact areas may be offset to each other.

In the step of moving the rigid circuit board is moved to a working position in the electronics level. The rigid circuit board is moved along a mounting trajectory. The mounting trajectory is running along the electronics level.

Along the mounting trajectory the rigid circuit board may be moved sideways in relation to the placing trajectory. Sections of the mounting trajectory may be perpendicular to the placing trajectory. The mounting trajectory may end in a final position. The final position may be referred to as working position of the rigid circuit board. Along the mounting trajectory the contact areas may be moved in between the ends of the connection fingers and the battery cells. In the working position the rigid circuit board may be arranged between the ends of the connection fingers and the battery cells. In the working position the ends of the connection fingers and contact areas may be aligned with each other.

In the step of connecting the connection fingers incorporated in at least two of the cell connectors are electrically connected to an individual contact area of the electric circuit each. The contact areas are arranged on the far side of the rigid circuit board facing away from the battery cells.

The ends of the connection fingers may be mechanically pressed against the contact areas to ascertain an electric connection. The ends of the connection may be soldered to the contact areas.

According to an embodiment of the invention, the connection finger is pressed against the contact area by a screw screwed trough the connection finger and the rigid circuit board. The screw is screwed into a nut arranged on a near side of the rigid circuit board. The near side is facing the battery cells.

The connection finger and the rigid circuit board may each feature a hole for the screw. The holes may be aligned to each other when the rigid circuit board is arranged in the working position. The screw may be a machine screw. A nut may be made out of a metal material. The nut may provide matching threads for the threads of the screw. The rigid circuit board may be clamped between the connection finger and the nut. The nut may be arranged on an inaccessible side of the rigid circuit board.

According to an embodiment of the invention, the nut is soldered or pressed-in to the near side of the rigid circuit board.

The nut may be a solder-nut. The solder-nut may be positioned on solder pads arranged on the near side of the rigid circuit board. The solder-nut may be soldered together with the electronic components of the electric circuit. The nut may alternatively be a press-nut. The press-nut may be positioned on the near side of the rigid circuit board over a press-hole in the rigid circuit board. The press-nut may be pressed into the press-hole from the near side of the rigid circuit board with the aid of a press.

According to an embodiment of the invention, at least one of the connection fingers crosses the electronics level through a cut-out of the rigid circuit board.

A cut-out may be a recess or a hole in the rigid circuit board. The cut-out may be open to at least one side and therefore be arranged along an edge of the rigid circuit board. Alternatively, the cut-out may be enclosed by the rigid circuit board on all sides and therefore be arranged away from the edge of the rigid circuit board. The cut-out may be big enough to accommodate the bent end of the connection finger and a portion of the connection finger crossing the electronics level. The cut-out may be arranged next to the contact area. The cut-out may be offset from the contact area by a length of the mounting trajectory. The cut-out may be offset in the direction of the mounting trajectory. In the locating position the end of the connection finger may be arranged in the cut-out. During the movement along the mounting trajectory the contact area may be moved between the end of the connection finger and the battery cells. Viewed from another perspective, the end of the connection finger may slide over the surface of the rigid circuit board during the movement along the mounting trajectory. In the working position the end of the connection finger may overlap the rigid circuit board.

According to an embodiment of the invention, the battery module further comprises a mounting frame for the rigid circuit board. The mounting frame is arranged in the interconnection level. The mounting frame is configured to fix the rigid circuit board in the working position in the electronics level.

A mounting frame may be made of an electrically insulating plastics material. The cell connectors may be mechanically affixed to the mounting frame before connecting them to the battery cells. The mounting frame may sit upon a surface of the battery cells. The mounting frame may be mechanically connected to the holding frame. The mounting frame may feature means for aligning the rigid circuit board to the connection fingers.

According to an embodiment of the invention, the mounting frame comprises at least one locating pin sticking through a locating cut-out of the rigid circuit board.

A locating pin may protrude from the mounting frame essentially perpendicular to the interconnection level. The locating pin may be inserted into the locating cut-out during the placing along the placing trajectory. In the locating position and/or the working position the locating pin may protrude from the far side of the rigid circuit board. The locating pin may be tapered to facilitate inserting the locating pin in the locating cut-out. The locating cut-out may be bigger dimensioned than the locating pin.

According to an embodiment of the invention, the locating cut-out is elongated in a direction of the mounting trajectory of the rigid circuit board. The mounting trajectory connects a locating position for the locating pin to a working position for the locating pin.

The locating cut-out may be an oblong hole. The locating pin may slide along the locating cut-out during the movement of the rigid circuit board along the mounting trajectory. Contact between the locating pin and sides of the locating cut-out may limit a range of movement of the rigid circuit board perpendicular to the oblong hole.

According to an embodiment of the invention, the mounting frame comprises at least one support dome for the rigid circuit board. The near side of the rigid circuit board is in contact with the support dome when in the working position.

A support dome may be a protrusion of the mounting frame. On top of the mounting dome may be a contact surface. The contact surface may be flattened in the electronics level. The support dome may define a distance between the interconnection level and the electronics level. The mounting frame may comprise at least three support domes. With three support domes arranged on the corners of a virtual triangle an angle of the electronics level can be defined. A locating pin may protrude from the support dome.

According to an embodiment of the invention, the rigid circuit board is screwed to at least one of the support domes from the far side of the rigid circuit board.

The rigid circuit board may feature at least one hole for a screw where the rigid circuit board is in contact with the support dome when in the working position. The hole in the rigid circuit board may be offset from the support dome when the rigid circuit board is in the locating position. The hole may be offset in the direction of the mounting trajectory. The support dome may feature a hole for the screw. The screw can be a self-cutting screw. The hole in the support dome may have a smaller diameter than the screw.

According to an embodiment of the invention, the support dome comprises a molded-in or pressed-in nut.

The nut can be made out of a metal material. The nut may comprise threads for the screw. The screw can be a machine screw. A screwed connection can be robust. The rigid circuit board may be clamped between a head of the screw and the support dome.

According to an embodiment of the invention, the screw in the support dome and the screw through the connection finger are of the same type of screw.

The screws may feature equal threads. The screws may feature equal lengths. The screws may feature equal diameters. The screws may feature equal screw drives. With only one type of screw there can be no confusion.

According to an embodiment of the invention, at least one of the support domes comprises a sliding ramp. The sliding ramp defines the mounting trajectory for the rigid circuit board. The rigid circuit board comprises a sliding cut-out. The sliding cut-out is located next to the support dome when in the working position. A near side corner of the sliding cut-out slides up the sliding ramp on the mounting trajectory to lift the rigid circuit board to the electronics level.

A sliding ramp may be arranged at a sliding angle to the interconnection level respectively the electronics level. The sliding ramp may be aligned with the mounting trajectory. When the rigid circuit board is in the locating position, the support dome with the sliding ramp may be arranged inside the sliding cut-out. A lower end of the sliding ramp may be closer to the interconnection level than a higher end of the sliding ramp. The higher end may be arranged approximately in the electronics level. The higher end may lie on the contact surface of the support dome. By sliding along the sliding ramp on the mounting trajectory the rigid circuit board may be lifted up to the end of the connection finger. While the rigid circuit board is sliding along the sliding ramp, the support dome may be moved out of the sliding cut-out.

According to an embodiment of the invention, the electronic components of the electric circuit are soldered to the near side of the rigid circuit board.

On the near side of the rigid circuit board the electronic components may be facing the battery cells. Therefore, the electronic components are arranged in a gap between the rigid circuit board and the cell connectors. On the near side of the rigid circuit board the electronic components are protected by the rigid circuit board.

According to an embodiment of the invention, the electric circuit comprises at least one temperature sensor thermally coupled to a connection finger.

A temperature sensor may be an electronic component of the electric circuit. The temperature sensor may be electrically isolated from the connection finger.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a spatial view of a battery module according to an embodiment of the invention.
Fig. 2 shows a detailed view of the rigid circuit board of Fig. 1 in a locating position.
Fig. 3 shows a sectional view of the rigid circuit board of Fig. 1 in the locating position of Fig. 2.
Fig. 4 shows a detailed view of the rigid circuit board of Fig. 1 in a working position.
Fig. 5 shows a detailed view of the battery module of Fig. 1.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

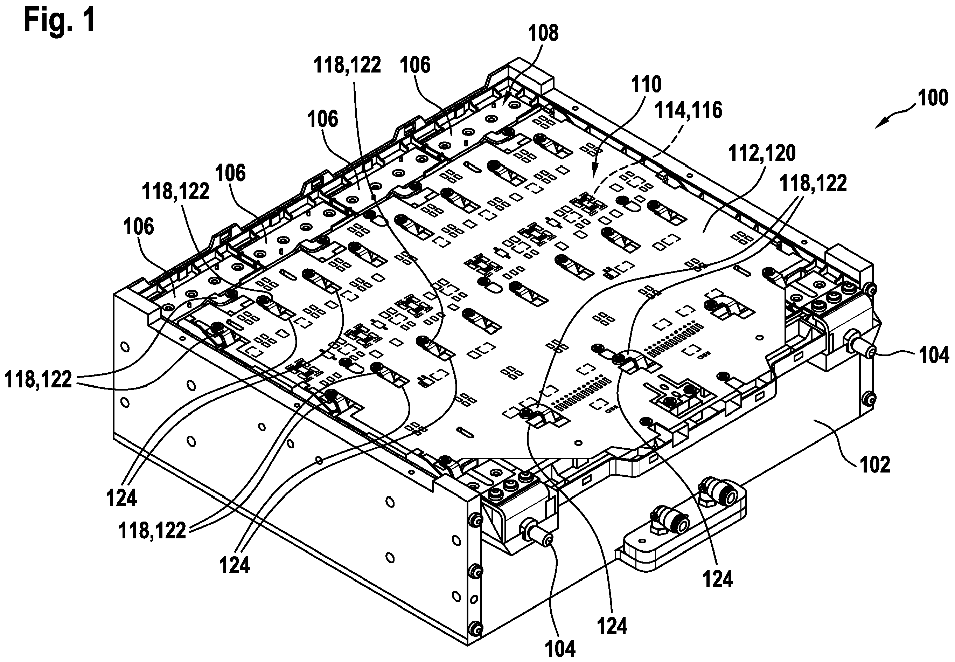

Fig. 1 shows a spatial view of a battery module 100 according to an embodiment of the invention. A multitude of battery cells of the battery module 100 are arranged in a holding frame 102 of the battery module 100. The shown battery module 100 consists of 48 battery cells in three rows of 16 battery cells each. The holding frame 102 has a rectangular shape, is made out of joined metal plates and encloses the battery cells on five sides. A sixth side of the holding frame 102 is open.

Interconnection faces of the battery cells for electrical interconnection are arranged on the open side of the holding frame 102. Electric poles of the battery modules are arranged on the interconnection faces. The interconnection faces of all battery cells are arranged in a common plane. The poles of the battery cells are interconnected between terminals 104 of the battery module 100 by a multitude of cell connectors 106. The cell connectors 106 form an interconnection level 108 of the battery module 100. The terminals 104 are arranged on a side face of the battery module 100 perpendicular to the interconnection level 108.

In the shown battery module 100 the cell connectors 106 interconnect a series of 24 parallelly interconnected pairs of battery cells. Therefore, each cell connector 106 is in contact with four different battery cells. Only terminal connectors contacting the terminals 104 at the ends of the series are in contact with two different battery cells.

Above the interconnection level 108 an electronics level 110 of the battery module 110 is arranged. A rigid circuit board 112 is arranged in the electronics level 110. The rigid circuit board 112 is arranged approximately parallel to the interconnection level 108. The rigid circuit board 112 rests on support domes and is screwed to select support domes.

The rigid circuit board 112 comprises an electric circuit 114 that is configured to monitor and evaluate electric variables of the battery cells. Conducting tracks in or on the rigid circuit board 112 connect electronic components 116 of the electric circuit 114. The electric circuit 114 may be referred to as battery management system.

Each cell connector 106 has a connection finger 118 that is bent up from of the interconnection level 108 in direction of the electronics level 110. Each connection finger 118 crosses over the electronics level 110 and is connected to the electric circuit 114 on a far side 120 of the rigid circuit board 112 facing away from the cell connectors 106. An end 122 of each connection finger 118 is bent in reverse approximately parallel to the interconnection level 108 to conform to the electronics level 110. The connection fingers 118 are fixed to the far side 120 of the rigid circuit board 112 with a screw each. Alternatively or complimentarily, the connection fingers 118 can be welded or soldered to a welding or soldering pad located on the far side 120 of the rigid circuit board 112.

Most of the connection fingers 118 intersect the rigid circuit board 112 through cut-outs 124 in the rigid circuit board 112. There are two different kinds of cut-outs 124 for differently shaped ends 122. One kind of cut-out 124 is shaped as an oblong rectangle. Through this kind of cut-out 124 connection fingers 118 with straight ends 122 protrude. The other kind of cut-out 124 is L-shaped. Through the L-shaped cut-outs 124 connection fingers 118 with angular ends 122 protrude.

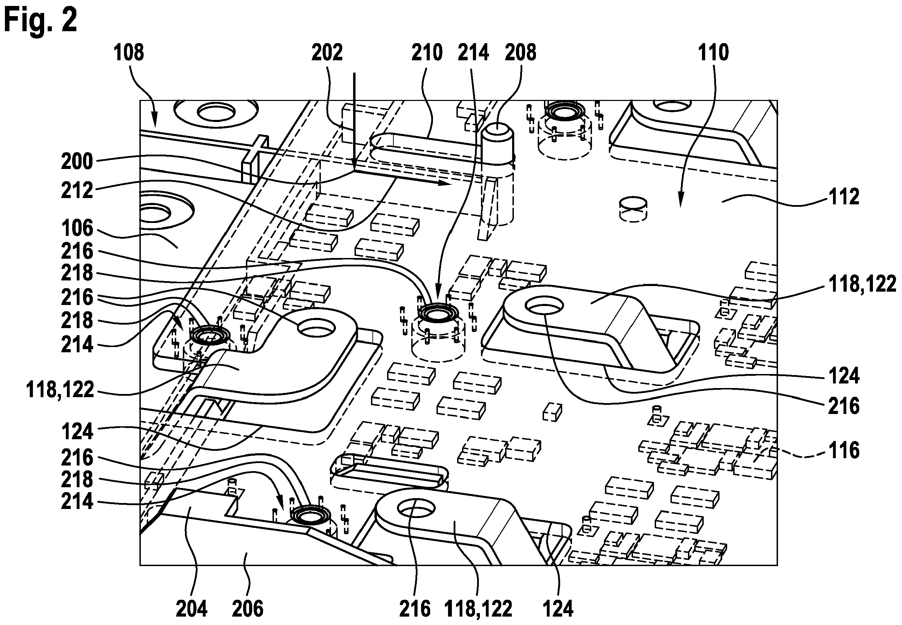

Fig. 2 shows a detailed view of the rigid circuit board 112 of Fig. 1 in a locating position 200. In the locating position 200 the ends 122 of the connection fingers 118 are arranged inside the cut-outs 124 in the rigid circuit board 112. The rigid circuit board 112 is guided into the locating position 200 along a placing trajectory 202. The placing trajectory 202 is roughly perpendicular to the interconnection level 108. The placing trajectory 202 is defined by guiding elements 204 of a mounting frame 206 for the rigid circuit board 112 by a form fit.

Major parts of the mounting frame 206 are placed on the interconnection faces of the battery cells. The mounting frame 206 is arranged between the battery cells and the rigid circuit board 112. The cell connectors 106 are aligned to the poles by the mounting frame 206.

The guiding elements 204 interact with a contour of the rigid circuit board 112. The guiding elements 204 prevent a random placement of the rigid circuit board 112 to protect the electronic components 116 on a near side of the rigid circuit board 112 facing the battery cells. Only when the contour of the rigid circuit board 112 is correctly aligned with the guiding elements 204 the form fit is achieved and the rigid circuit board 112 can be moved along the placing trajectory 202 sliding on the guiding elements 204. The placing trajectory 202 ends in the locating position 200. During the movement along the placing trajectory 202 the cut-outs 124 move over the ends 122 of the connection fingers 118 without touching them. During the movement along the placing trajectory 202 the crossing of the electronics level 110 is achieved.

At the end of the placing trajectory 202 at least one locating pin 208 of the mounting frame 206 penetrates a locating cut-out 210 of the rigid circuit board 112. The locating cut-out 210 is an oblong defining a length and a direction of a mounting trajectory 212 towards a working position for the rigid circuit board 112. Contact between the locating pin 208 and sides of the locating cut-out 210 prevent movements of the rigid circuit board 112 perpendicular to the locating cut-out 210. When the rigid circuit board 112 is moved along the mounting trajectory 212 to the working position, contact areas 214 on the far side 120 of the rigid circuit board 112 are simultaneously moved underneath the ends 122 located above the far side 120.

The rigid circuit board 112 has a through hole 216 in the middle of every contact are 214. Equally each end 122 of the connection fingers 118 features a corresponding through hole 216. When the rigid circuit board 112 is in the working position, the through holes 216 are aligned to each other. To press the end 122 against the contact area 214 a screw is put through both through holes 216 and is screwed into a nut 218 arranged on the near side of the rigid circuit board 112.

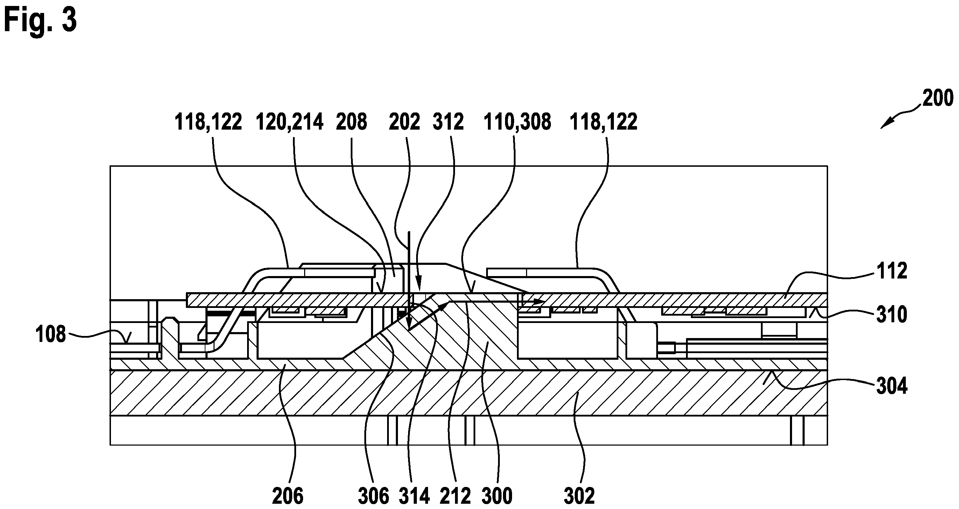

Fig. 3 shows a sectional view of the rigid circuit board 112 of Fig. 1 in the locating position 200 of Fig. 2. A support dome 300 of the mounting frame 206 is arranged in a sectional plane of the sectional view. Additionally, a battery cell 302 of the battery module 100 is arranged in the sectional plane. The mounting frame 206 rests on the interconnection face 304 of the battery cells 302.

The support dome 300 features a sliding ramp 306 leading up to a support surface 308 of the support dome 300, defining a distance between the interconnection level 108 and the rigid circuit board 112 in the working position. In the working position the near side 310 of the rigid circuit board 112 will rest against the support surface 308.

In the depicted locating position 200 the rigid circuit board 112 is arranged closer to the interconnection level 108 than when in the working position. Therefore, the support surface 308 is contained in a sliding cut-out 312 and a near side corner 314 of the sliding cut-out 312 rests against the sliding ramp 306, defining a distance between the interconnection level 108 and the rigid circuit board 112 in the locating position 200.

The rigid circuit board 112 is placed in the locating position 200 along the placing trajectory 202. Until the near side corner 314 rests on the sliding ramp 306. The placing trajectory 202 is angled transverse to the interconnection level 108. During the movement along the placing trajectory 202 the support dome 300 slides into the sliding cut-out 312.

After the placing, the rigid circuit board 112 is moved sideways along the mounting trajectory 212. Due to the contact with the sliding ramp 306 the rigid circuit board 112 is also moved away from the interconnection level 108.

The transition from the sliding ramp 306 to the support surface 308 defines a distance of the electronics level 110 from the interconnection level 108. By sliding up the sliding ramp 306, the rigid circuit board 112 is moved against an underside of the ends 122 of the connection fingers 118. By sliding along the support surface 308 in the electronics level 110 until the locating pin 208 in the locating cut-out prevents further movement, the rigid circuit board 112 reaches the working position. In the working position the contact areas 214 of the rigid circuit board 112 are aligned with the ends 122 of the connection fingers 118.

After reaching the working position, the connection fingers 118 are electrically connected to the contact areas 214 on the far side 120 of the rigid circuit board 112.

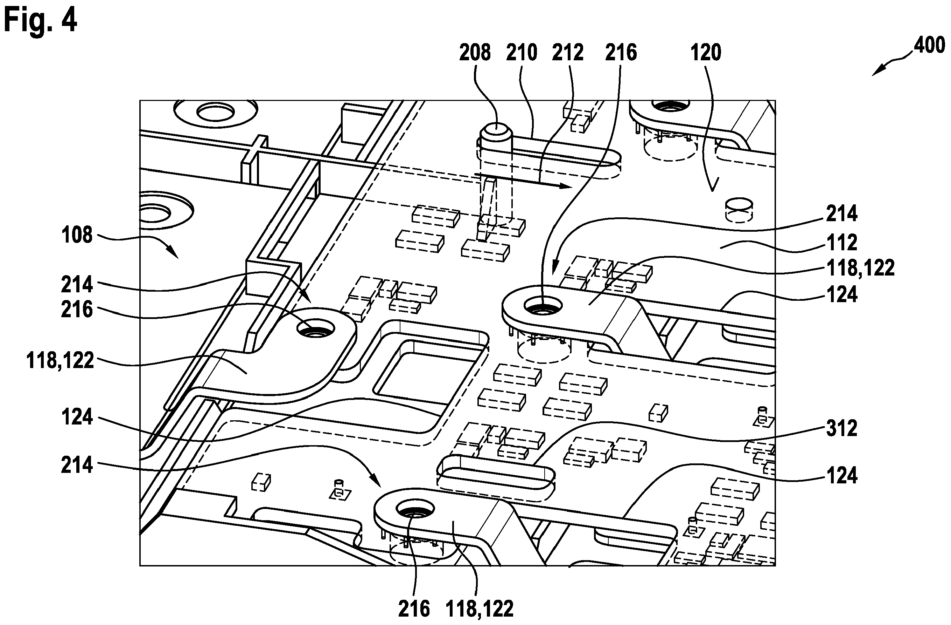

Fig. 4 shows a detailed view of the rigid circuit board 112 of Fig. 1 in a working position 400. In the working position 400 the locating pin 208 is located at an extreme end of the locating cut-out 210, where it prevents further movement in the direction of the mounting trajectory 212. The support dome has slid out of the sliding cut-out 312 and the support area rests against the near side of the rigid circuit board 112, where it defines the distance between the rigid circuit board 112 and the interconnection level 108. The connection fingers 118 reach through the cut-outs 124 to the far side 120 of the rigid circuit board 112. The ends 122 of the connection fingers 118 are arranged over the contact areas 214 and the through holes 216 are aligned with each other.

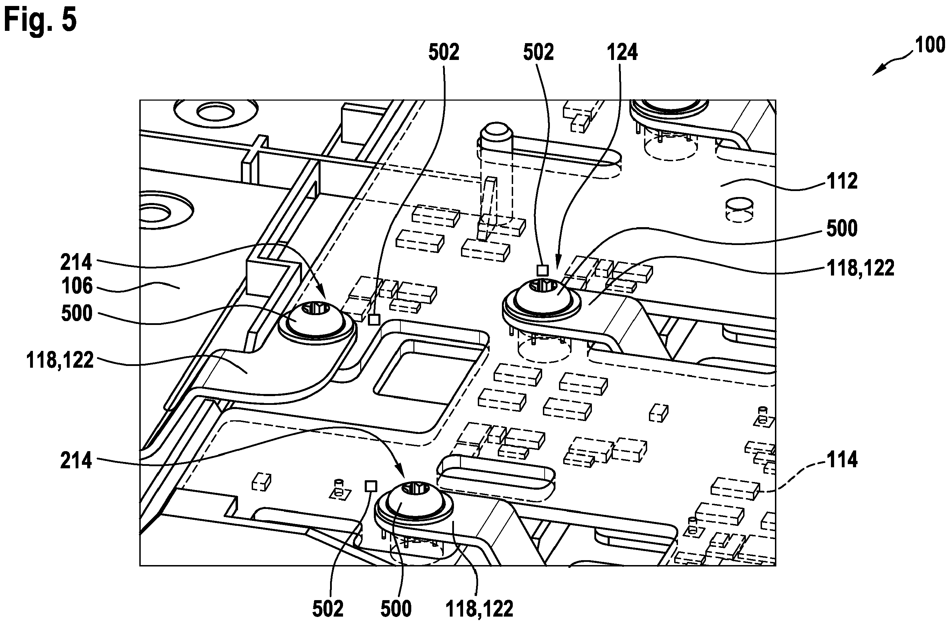

Fig. 5 shows a detailed view of the battery module 100 of Fig. 1. Here the ends 122 of the connection fingers 118 are electrically and thermally connected to the contact areas 214 by screws 500 screwed into the nut on the near side of the rigid circuit board 112. The electric circuit 114 has a temperature sensor 502 thermally coupled to each contact area 214. Since the connection fingers 118 are formed integrally with the cell connectors 106, they are thermally coupled to the cell connectors 106. Therefore, the temperature sensor 502 can sense a temperature only slightly offset from a temperature of the cell connector 106 itself.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: battery module
- 102: holding frame
- 104: terminal
- 106: cell connector
- 108: interconnection level
- 110: electronics level
- 112: rigid circuit board
- 114: electric circuit
- 116: electronic component
- 118: connection finger
- 120: far side
- 122: end
- 124: cut-out
- 200: locating position
- 202: placing trajectory
- 204: guiding element
- 206: mounting frame
- 208: locating pin
- 210: locating cut-out
- 212: mounting trajectory
- 214: contact area
- 216: through hole
- 218: nut
- 300: support dome
- 302: battery cell
- 304: interconnection face
- 306: sliding ramp
- 308: support surface
- 310: nearside
- 312: sliding cut-out
- 314: near side corner
- 400: working position
- 500: screw
- 502: temperature sensor

## Claims

1. A battery module (100), comprising:
a plurality of battery cells (302) electrically interconnected with each other via cell connectors (106) arranged in an interconnection level (108) of the battery module (100),
a rigid circuit board (112) comprising an electric circuit (114) for evaluating voltage measurements and/or temperature measurements in the battery module (100), wherein the rigid circuit board (112) is arranged in an electronics level (110) of the battery module (100) arranged neighboring to the interconnection level (108),
wherein at least two of the cell connectors (106) each incorporate a connection finger (118) angled with respect to the interconnection level (108), wherein each connection finger (118) crosses the electronics level (110) and is electrically connected to an individual contact area (214) of the electric circuit (114) on a far side (120) of the rigid circuit board (112) facing away from the battery cells (302).

2. The battery module (100) of claim 1,
wherein the connection finger (118) is pressed against the contact area (214) by a screw (500) screwed trough the connection finger (118) and the rigid circuit board (112) into a nut (218) arranged on a near side (310) of the rigid circuit board facing (112) the battery cells (302).

3. The battery module (100) of claim 2,
wherein the nut (218) is soldered or pressed-in to the near side (310) of the rigid circuit board (112).

4. The battery module (100) of one of the previous claims,
wherein at least one of the connection fingers (118) crosses the electronics level (110) through a cut-out (124) of the rigid circuit board (112).

5. The battery module (100) of one of the previous claims, further comprising:
a mounting frame (206) for the rigid circuit board (112) arranged in the interconnection level (108), wherein the mounting frame (206) is configured to fix the rigid circuit board (112) in a working position (400) in the electronics level (110).

6. The battery module (100) of claim 5,
wherein the mounting frame (206) comprises at least one locating pin (208) sticking through a locating cut-out (210) of the rigid circuit board (112).

7. The battery module (100) of claim 6,
wherein the locating cut-out (210) is elongated in a direction of a mounting trajectory (212) of the rigid circuit board (112), wherein the mounting trajectory (212) connects a locating position (200) for the locating pin (208) to a working position (400) for the locating pin (208).

8. The battery module (100) of one of the claims 5 to 7,
wherein the mounting frame (206) comprises at least one support dome (300) for the rigid circuit board (112), wherein the near side (310) of the rigid circuit board (112) is in contact with the support dome (300) when in the working position (400).

9. The battery module (100) of claim 8,
wherein the rigid circuit board (112) is screwed to at least one of the support domes (300) from the far side (120) of the rigid circuit board (112).

10. The battery module (100) of claim 9,
wherein the support dome (300) comprises a molded-in or pressed-in nut.

11. The battery module (100) of claim 2 and 10,
wherein the screw in the support dome (300) and the screw (500) through the connection finger (118) are of the same type of screw (500).

12. The battery module (100) of one of the claims 8 to 11,
wherein at least one of the support domes (300) comprises a sliding ramp (306) defining a mounting trajectory (212) for the rigid circuit board (112), wherein the rigid circuit board (112) comprises a sliding cut-out (312) next to the support dome (300) when in the working position (400), wherein a near side corner (314) of the sliding cut-out (312) slides up the sliding ramp (306) on the mounting trajectory (212) to lift the rigid circuit board (112) to the electronics level (110).

13. The battery module (100) of one of the previous claims,
wherein electronic components (116) of the electric circuit (114) are soldered to the near side (310) of the rigid circuit board.

14. The battery module (100) of one of the previous claims,
wherein the electric circuit (114) comprises at least one temperature sensor (502) thermally coupled to a connection finger (118).

15. A mounting method for a battery module (100) of one of the previous claims, the method comprising the steps of:
placing the rigid circuit board (112) in a locating position (200) along a placing trajectory (202), which is angled with respect to the interconnection level (108);
moving the rigid circuit board (112) to a working position (400) in the electronics level (110) along a mounting trajectory (212) running along the electronics level (110),
electrically connecting the connection fingers (118) incorporated in at least two of the cell connectors (106) to an individual contact area (214) of the electric circuit (114) on the far side (120) of the rigid circuit board (112) facing away from the battery cells (302).
